# EUROPÄISCHE PATENTSCHRIFT

(11) **EP 1 112 875 B1**
(45) Veröffentlichungstag und Bekanntmachung des Hinweises auf die Patenterteilung: **01.03.2006**
(21) Anmeldenummer: 00121063.2
(22) Anmeldetag: 27.09.2000
(51) Int. Cl.: B60J 7/00

(54) **Sonnendach**
Sunroof
Toit ouvrant

(30) Priorität: 27.12.1999 JP 37137899
(43) Veröffentlichungstag der Anmeldung: 04.07.2001
(73) Patentinhaber: Webasto Vehicle Systems International GmbH, 82131 Stockdorf (DE)
(72) Erfinder: Hertel, Johann, 82061 Neuried (DE); Staltmayer, Thomas, 82131 Gauting (DE); Ueki, Shigeru,, Higashi-Hiroshima-shi, Hiroshima (JP); Tanaka, Hiroshi, Higashi-Hiroshima-shi, Hiroshima (JP)
(74) Vertreter: Konnerth, Dieter Hans

(56) Entgegenhaltungen:
- DE-A- 3 641 033
- DE-C- 4 010 942
- US-A- 4 702 518
- US-A- 5 484 184

## Beschreibung

Die Erfindung betrifft ein Sonnendach eines Fahrzeugs mit einem Deckel zum Freigeben oder Schließen einer in einem festen Dach gebildeten Öffnung, einer linken und einer rechten Führungsschiene zum Lagern des Deckels, einer Antriebseinrichtung zum Ausstellen oder Absenken und zum Vorwärts- und Rückwärtsverschieben des Deckels und mit einer jeweiligen Blendeneinrichtung, die vertikal auseinanderziehbar ist und die Antriebseinrichtung von innen her abdeckt, während der Deckel angehoben ist.

Ein derartiges Sonnendach ist grundsätzlich als inneres oder innen geführtes Schiebe-Hebedach, bei dem der Deckel aus seiner eine Dachöffnung vollständig schließenden Stellung nach oben verschwenkbar ist und vor dem nach hinten gerichteten Verschieben nach unten geschwenkt wird und aus seiner abgesenkten Stellung unterhalb einer Dachhaut nach hinten verschoben wird, oder als äußeres oder außen geführtes Hebe-Schiebedach gebildet, dessen nach oben geschwenkter Deckel außenlaufend nach hinten verschoben wird.

Aus der DE 33 08 065 ist ein innen geführtes Schiebe-Hebedach bekannt geworden, das einen Deckel zum Schließen oder Freigeben einer Dachöffnung aufweist, wobei an beiden Seiten des Deckels eine Blende angeordnet ist, die entweder an dem Deckel oder an einem Dachrahmen befestigt ist.

Ein ähnliches Sonnendach, das in der japanischen Gebrauchsmuster-Offenlegungsschrift Nr. 139320 aus 1983 beschrieben ist, enthält eine Blende in der Art eines Faltenbalges.

Aufgabe der Erfindung ist es, bei einem eingangs genannten Sonnendach eines Fahrzeugdaches eine Blendeneinrichtung zu schaffen, die eine verbesserte Bewegbarkeit beim Öffnungs- und beim Schließvorgang des Deckels und auch bei unterschiedlichen Arten von Sonnendächem aufweist.

Diese Aufgabe wird durch ein Sonnendach mit den Merkmalen des Anspruchs 1 sowie durch ein Sonnendach mit den Merkmalen des Anspruchs 13 gelöst. Vorteilhafte Ausgestaltungen der Erfindung sind in den Unteransprüchen angegeben.

Unter einer Blendeneinrichtung, die vertikal auseinanderziehbar ist, wird jede in vertikaler Richtung expandierbare oder ausdehnbare Blende jeder Art verstanden, wie z. B. eine Scheren- oder Fächerblende, eine Blende aus Stoff oder eine Faltenbalgblende. Wenn die Blende auseinandergezogen ist, während der Deckel in seiner ausgestellten Stellung ist, verdeckt sie die Antriebseinrichtung und dient gleichzeitig als Schutz gegen Windströmung von außen und auch wenn der Dekkel nach hinten verschoben wird, behält die Blende eine Schutzfunktion bei.

In einer bevorzugten Ausführungsform ist der Unterabschnitt der Blende am festen Dach festgelegt und der Oberabschnitt der Blende, der am Deckel verschiebbar gelagert ist, ist an seinem Vorderende in einer dachfesten Lagereinrichtung gehalten, die dem Vorderende des Oberabschnitts der Blende eine vertikale Ausgleichsbewegung gestattet. Auf diese Weise kann sich die Blende an die ausgeschwenkten Stellungen des Deckels verbessert anpassen.

Mit der erfindungsgemäßen Lösung, wonach die Blende in einen Oberabschnitt und in einen Unterabschnitt unterteilt ist, die miteinander verbunden und in Längsrichtung gegeneinander verschiebbar sind, und wobei der Oberabschnitt der Blende an dem Deckel und der Unterabschnitt am festen Dach festgelegt ist, wird auch beim rückwärts gerichteten Verschieben des ausgestellten Deckels die Blendenfunktion aufrechterhalten.

Nachfolgend werden Ausführungsbeispiele des Sonnendaches unter Bezugnahme auf Zeichnungen näher erläutert. Es zeigt:
- Fig. 1: in einer schematischen Querschnittseitenansicht ein erstes Ausführungsbeispiel der Erfindung;
- Fig. 2: in drei Seitenansichten eine Darstellung des Betriebs eines Deckels und einer Blendeneinrichtung des Sonnendachs gemäß dem ersten Ausführungsbeispiel der vorliegenden Erfindung;
- Fig. 3: in einer Gesamtansicht in schematischer, perspektivischer Darstellung einen Zustand, in dem der Deckel gemäß dem ersten Ausführungsbeispiel der vorliegenden Erfindung in einer angehobenen Stellung ist;
- Fig. 4: in einer Gesamtansicht in schematischer, perspektivischer Darstellung einen Zustand, in dem der Deckel gemäß dem ersten Ausführungsbeispiel der vorliegenden Erfindung in seiner vollständig geöffneten Stellung ist;
- Fig. 5: in einer perspektivischen Explosionsdarstellung die Blendeneinrichtung und einen Windabweiser;
- Fig. 6: in einer Querschnittansicht die Blendeneinrichtung;
- Fig. 7: in einer schematischen Querschnittansicht ein zweites Ausführungsbeispiel der vorliegenden Erfindung;
- Fig. 8: in einer perspektivischen Explosionsansicht eine Ausstellvorrichtung und eine Blendeneinrichtung gemäß dem zweiten Ausführungsbeispiel der vorliegenden Erfindung;
- Fig. 9: in drei Seitenansichten eine Darstellung des Betriebs des Deckels und der Blendeneinrichtung gemäß dem zweiten Ausführungsbeispiel der vorliegenden Erfindung;
- Fig. 10: in einer schematischen Längsquerschnittansicht ein drittes Ausführungsbeispiel der vorliegenden Erfindung;
- Fig. 11: in drei Seitenansichten eine Darstellung des Betriebs des Deckels und der Blendeneinrichtung gemäß dem dritten Ausführungsbeispiel der vorliegenden Erfindung;
- Fig. 12: in einer perspektivischen Ansicht die Blendeneinrichtung und ein Streckelement;
- Fig. 13: in einer perspektivischen Ansicht die Blendeneinrichtung und das Streckelement gemäß einem vierten Ausführungsbeispiel der vorliegenden Erfindung;
- Fig. 14: in vier Seitenansichten eine Darstellung des Betriebs des Deckels und der Blendeneinrichtung gemäß dem vierten Ausführungsbeispiel der vorliegenden Erfindung;

- Fig. 15: in einer schematischen Längsschnittansicht ein fünftes Ausführungsbeispiel der vorliegenden Erfindung;
- Fig. 16: in einer perspektivischen Explosionsansicht den Ausstellhebel und die Blendeneinrichtung gemäß dem fünften Ausführungsbeispiel der vorliegenden Erfindung;
- Fig. 17: in einer schematischen Längsschnittansicht ein sechstes Ausführungsbeispiel der vorliegenden Erfindung;
- Fig. 18: in einer Querschnittansicht einen Hinterabschnitt des sechsten Ausführungsbeispiels der vorliegenden Erfindung;
- Fig. 19: in einer schematischen perspektivischen Gesamtansicht das Fahrzeugdach in einem Zustand, in dem der Deckel gemäß dem sechsten Ausführungsbeispiel der vorliegenden Erfindung in seiner angehobenen Stellung ist;
- Fig. 20: in einer perspektivischen Ansicht die Blendeneinrichtung;
- Fig. 21: in den drei perspektivischen Ansichten 21a bis 21c ein weiteres Ausführungsbeispiel einer Blende;
- Fig. 22: in einem Längsschnitt ein Ausführungsbeispiel einer Blende;
- Fig. 23: in den drei perspektivischen Ansichten 23a bis 23c ein weiteres Ausführungsbeispiel einer Blende;
- Fig. 24: in einer seitlichen Draufsicht ein weiteres Ausführungsbeispiel einer Blende für ein ausstellbares und verschiebbares Sonnendach in einer Schließstellung des Deckels;
- Fig. 25: in einer seitlichen Draufsicht die in Fig. 24 gezeigte Blende bei ausgestelltem Deckel; und
- Fig. 26: in einer seitlichen Draufsicht die in Fig. 24 gezeigte Blende bei ausgestelltem und nach hinten verschobenem Deckel.

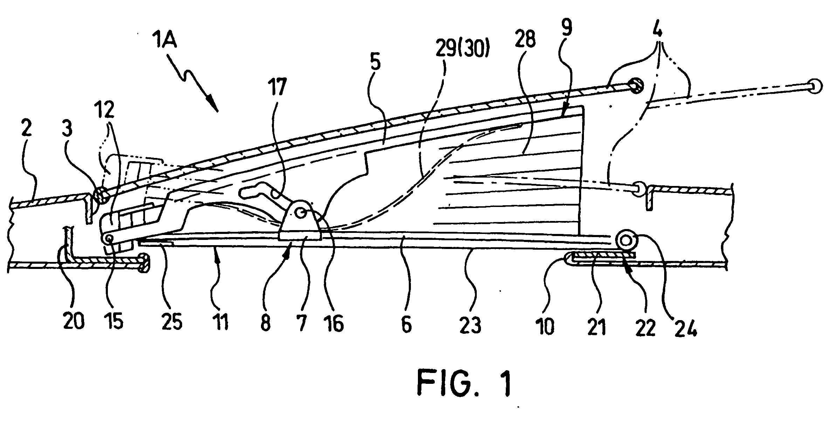

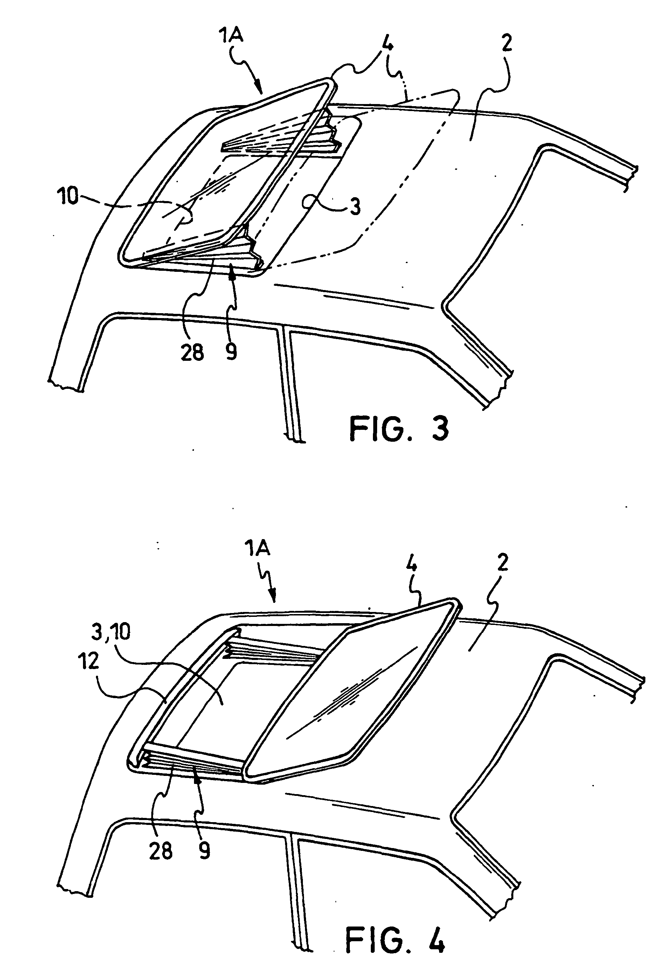

Ein in den Fig. 1 bis 6 dargestelltes erstes Ausführungsbeispiel eines Sonnendaches 1A, das an einem festen Dach 2 eines Fahrzeuges, wie zum Beispiel eines Personenwagens, angeordnet ist und ein ausstellbares Schiebedach darstellt, enthält einen Deckel 4 zum Freigeben oder Verschließen einer in dem festen Dach 2 gebildeten Öffnung 3, wobei der Deckel 4 in seiner ausgestellten Stellung nach hinten bewegt werden kann, eine linke und eine rechte Ausstelleinrichtung 5, die an einer Unterseite des Deckels 4 an der linken bzw. der rechten Seite angeordnet sind, eine jeweilige Führungsschiene 6 zum verschiebbaren Lagern eines Vorderabschnittes der linken und der rechten Ausstelleinrichtung 5 in Längsrichtung, eine Antriebseinrichtung 8 zum Anheben oder Absenken der Ausstelleinrichtung 5 und zum Zurückschieben der Ausstelleinrichtung 5, während sie ihre angehobene Stellung beibehält, indem eine Schiebeeinrichtung 7, die an der Führungsschiene 6 gelagert ist, in Längsrichtung bewegt wird, eine Blendeneinrichtung 9, die zwischen der Führungsschiene 6 und dem Deckel 4 angeordnet ist, eine Sonnenschutzeinrichtung in Form eines Schiebehimmels 11 oder eines Sonnenrollos zum Freigeben oder Verschließen einer Innenöffnung 10, die unterhalb der Öffnung 3 des Daches 2 angeordnet ist, und einen Windabweiser 12, der sich in einem Vorderabschnitt der Öffnung 3 aufrichtet, wenn die Öffnung 3 freigegeben ist.

Der Deckel 4 ist aus einem transparenten oder durchscheinenden Glas oder Plastik hergestellt und enthält einen Schutzrahmen und eine Dichtung, die an einer Unterseite am Umfang des Deckels 4 angebracht ist, und der Schutzrahmen ist an der linken und der rechten Ausstelleinrichtung 5 mittels Bolzen befestigt.

Die linke und die rechte Ausstelleinrichtung 5 enthält in ihrem Vorderabschnitt jeweils einen Gleitschuh 15, der sich in der Führungsschiene 6 gleitend bewegen kann, und in ihrem Mittelabschnitt einen Kulissenschlitz 17, der sich nach hinten hin absenkt und mit einem Stift 16 der Schiebeeinrichtung 7 in Eingriff ist. Dieser Kulissenschlitz 17 ist durch Anbringen einer Kulissenplatte an der Ausstelleinrichtung 5 oder direkt an der Ausstelleinrichtung 5 gebildet. Der Stift 16 und der Kulissenschlitz 17 oder eine ähnliche Einrichtung sind zusammen mit der Ausstelleinrichtung 5 Bestandteile der Antriebseinrichtung 8.

Der Deckel 4 kann aus seiner die Öffnung 3 vollständig schließenden Stellung (in Fig. 1 mit strichpunktierter Linie teilweise dargestellt) in seine ausgestellte Stellung (in Fig. 1 mit durchgezogener Linie dargestellt) angehoben werden, indem der Stift 16 in dem Kulissenschlitz 17 mittels der Schiebeeinrichtung 7 in Längsrichtung gleitend verschoben wird, und er kann nach hinten verschoben werden in eine Stellung, in der die Öffnung 3 vollständig freigegeben ist (in Fig. 1 durch eine jeweils mit zwei Punkten strichpunktierte Linie dargestellt), indem der Stift 16 weiter nach hinten von der Stelle wegbewegt wird, die der ausgestellten Position des Deckels 4 entspricht. Der Deckel 4 kann auch aus seiner vollständig geöffneten Stellung in seine vollständig geschlossene Stellung bewegt werden, indem die Schiebeeinrichtung 7 nach vorne bewegt wird.

Ein Antriebskabel (nicht dargestellt) ist jeweils mit der linken und rechten Schiebeeinrichtung 7 verbunden und über ein Antriebszahnrad von einem Motor angetrieben.

Die linke und die rechte Führungsschiene 6 sind miteinander durch ein vorderes Rahmenteil 20 und ein mittleres Rahmenteil 21 verbunden und durch diese Teile und die Führungsschienen 6 ist ein Tragrahmen 22 für das Sonnendach 1A gebildet, der unter der Oberfläche des festen Daches 2 angeordnet ist. Ein Innenbereich des Tragrahmens 22 entspricht im wesentlichen der Innenöffnung 10 und ein Wasserrinnenabschnitt ist entlang der linken und der rechten Führungsschiene 6 und dem vorderen Rahmenteil 20 gebildet, so daß Regenwasser durch ein Vorder- oder ein Hinterende der jeweiligen Führungsschiene 6 ablaufen kann.

Der Tragrahmen 22 kann derart gestaltet sein, daß das vordere Rahmenteil 20 und das mittlere Rahmenteil 21 mit einem linken und einem rechten Längsteil verbunden sind und daß die Führungsschienen 6 mit dem linken bzw. dem rechten Teil verbunden sind.

Statt eines aus einer einzigen Platte gebildeten Schiebehimmels 11 kann gemäß dem vorliegenden Ausführungsbeispiel ein Sonnenrollo aus Leinwand oder dergleichen verwendet werden, das eine auf einer Wickelwelle 24 aufrollbare Stoffbahn 23 aufweist, wobei die Wickelwelle 24 hinter der Innenöffnung 10 befestigt ist und an der linken und der rechten Führungsschiene 6 gelagert ist, und wobei die Stoffbahn 23 an ihrem Vorderende eine vordere Auszugstange 25 aufweist, die an der linken und der rechten Führungsschiene 6 in Längsrichtung verschiebbar gelagert ist. Die Wickelwelle 24 weist eine Spiralfeder auf, um eine Rückzugskraft auf die Stoffbahn 23 aufzubringen.

Mittels der Blendeneinrichtung 9 wird verhindert, daß Luftwirbel durch die Innenöffnung 10 in den Fahrzeuginnenraum einströmen und daß die Antriebseinrichtung 8 einschließlich der Ausstellhebel 5 der Schiebeeinrichtung 7 oder dergleichen von dem Fahrzeuginnenraum her sichtbar ist, wenn sich der Deckel 4 in seiner nach hinten ansteigenden ausgestellten Position befindet. Die Blendeneinrichtung 9 enthält eine Blende 28, die vertikal auseinandergezogen oder zusammengezogen werden kann, und eine Spann- oder Streckeinrichtung 29 zum Auseinanderziehen oder zum Zusammenziehen der Blende 28, die mit der Aufwärts- und Abwärtsbewegung des Deckels 4 verknüpft ist. Der Windabweiser 12 ist am linken und am rechten Ende am jeweiligen Vorderabschnitt der linken und der rechten Blende 28 angebracht.

Die Blende 28 ist aus Gewebe, Papier oder Kunststoff oder dergleichen hergestellt und ist in der Art eines Akkordeons oder eines Faltenbalges gebildet, so daß sie sich vertikal ausdehnen oder auseinander ziehen kann, und ein unterer Abschnitt ist an einer Oberseite der Führungsschiene 6 an der der Innenöffnung 10 zugewandten Seite angeordnet, und eine Oberseite eines oberen Abschnittes ist mit einem im wesentlichen horizontalen Abschnitt 5a der Ausstelleinrichtung 5 in Kontakt gebracht.

Die Blendeneinrichtung 28 weist Plattenteile oder gehärtete Abschnitte zur Verstärkung ihres oberen bzw. unteren Abschnitts auf, so daß der untere Abschnitt an einer Komponente des Rahmens 22, die nicht von der Führungsschiene 6 gebildet ist, befestigt werden kann und/oder der obere Abschnitt der Blendeneinrichtung 28 kann direkt mit dem Deckel 4 in Kontakt gebracht werden.

Die Streckeinrichtung 29 ist als ein Federteil 30 gebildet, das in Seitenansicht bogenförmig oder in etwa U-förmig gebildet ist und das an seinem Mittelabschnitt an dem unteren Abschnitt der Blende 28 oder zusammen mit der Blende 28 an der Führungsschiene 6 befestigt ist und auch das Vorder- und das Hinterende der Streckeinrichtung 29 werden mit einer Unterseite des oberen Abschnitts der Blende 28 in Kontakt gebracht, so daß das Vorderende und das Hinterende der Blende 28 nach oben vorgespannt werden.

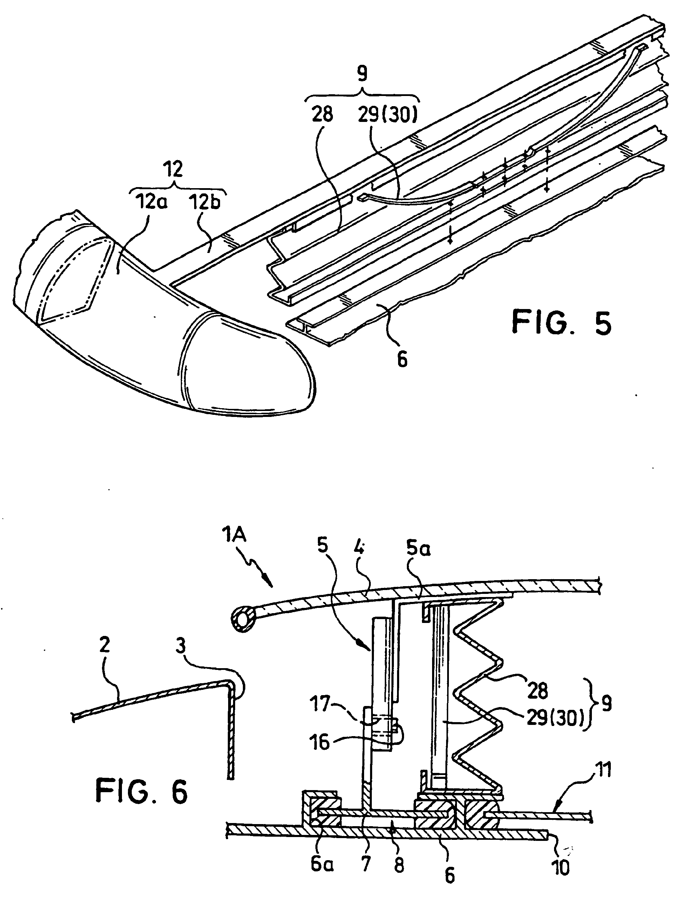

Der Windabweiser 12 enthält einen Windabweiser-Grundkörper 12a (siehe Fig. 5) mit einer vorderen Oberfläche, die eine geeignete Form aufweist, um den Fahrtwind abzulenken, und ein rechtes und ein linkes Halteteil 12b, von denen jedes mit einem linken bzw. einem rechten Ende des Grundkörpers 12a verbunden ist und des weiteren an dem oberen Abschnitt der Blende 28 befestigt ist, der als ein Lagerteil oder Lagerarm zum Befestigen des Windabweisers 12 an dem Rahmen 22 dient, so daß sie demgegenüber vertikal auseinanderziehbar ist.

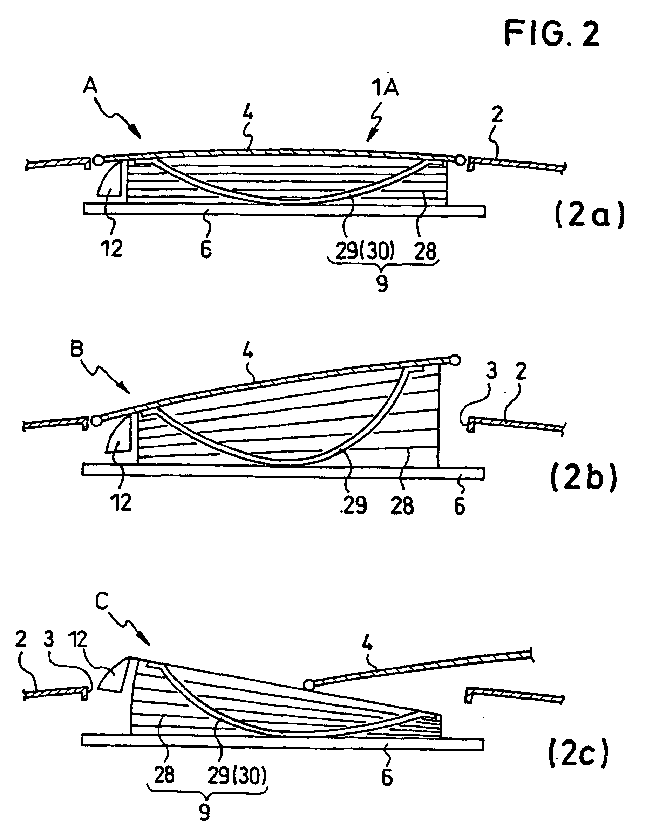

Das Sonnendach 1A ist in Fig. 1 durch strichpunktierte Linien oder in Fig. 2 in der oberen A-Ansicht in seiner vollständig geschlossenen Position dargestellt, in der die Öffnung 3 von dem Deckel 4 vollständig geschlossen ist und der Stift 16 der Schiebeeinrichtung 7 an einem Vorderende des Kulissenschlitzes 17 angeordnet ist. Wenn die Schiebeeinrichtung 7 aus dieser Stellung durch Betätigung der Antriebseinrichtung 8 nach hinten bewegt wird, wird die Ausstelleinrichtung 5 um den Gleitschuh 15 geschwenkt, wodurch ihr hinteres Ende angehoben wird, sobald der Stift 16 entlang des Kulissenschlitzes 17 zurückbewegt wird, und schließlich wird der Deckel 4 in seine ausgestellte Stellung angehoben, die in Fig. 1 mit durchgezogener Linie oder in Fig. 2 in der mittleren B-Ansicht dargestellt ist.

Das Aufstellen des Hinterendes des Deckels 4 ermöglicht eine Belüftung des Fahrzeuginnenraumes und sowie der Deckel 4 angehoben wird, wird der Oberabschnitt der zusammengezogenen Blende 28, der mit der Unterseite des Dekkels 4 in Kontakt ist, auch angehoben, wobei er mit dem Deckel 4 durch eine rückseitige Spannkraft des Federelementes 30 verbunden ist, so daß sich die Blende 28 in sich nach hinten öffnender Kreissektorform auseinander spreizt.

Aufgrund der sektorförmig geöffneten Blende 28 wird verhindert, daß eine Luftströmung durch einen Spalt zwischen dem festen Dach 2 und dem Deckel 4 und durch die Innenöffnung 10 einströmt und gleichzeitig dient die Blende 28 als eine Innenabdeckung zum Abdecken der Ausstellhebel 5 und der Schiebeeinrichtung 7 oder dergleichen, so daß diese von dem Fahrzeuginnenraum her nicht sichtbar sind, da die Blende 28 an der Innenseite angeordnet ist.

Wenn die Schiebeeinrichtung 7 aus derjenigen Position, in der der Deckel 4 vollständig angehoben ist, weiter nach hinten bewegt wird, kommt der Stift 16 mit einem hinteren unteren Ende des Kulissenschlitzes 17 in Eingriff und wird weiter nach hinten bewegt, während er von dem Ausstellhebel 5 begleitet ist, um so den Deckel 4 nach hinten in seine vollständig geöffnete Stellung zu bewegen, die in Fig. 1 durch eine mit jeweils zwei Punkten strichpunktierte Linie oder in Fig. 2 in der unteren C-Ansicht dargestellt ist.

Da die Blende 28 an der Seite der Führungsschiene 6 befestigt ist, verbleibt sie zu dieser Zeit in ihrer Längsstellung stationär und nur der Deckel 4 mit seinem angehobenen Hinterende wird nach hinten bewegt, während sein in der untersten Stellung angeordnetes Vorderende (oder ein Vorderabschnitt des Ausstellhebels 5) mit der Oberseite des Oberabschnittes der Blende 28 in Kontakt gehalten wird.

Während der Deckel 4 zurückbewegt wird, wird auch ein Kontaktpunkt zwischen dem Vorderende des Deckels 4 und dem Oberabschnitt der Blende 28, die sich in eine hinten gespreizte Sektorform umgewandelt hat, nach hinten bewegt, und dadurch wird der Hinterabschnitt der Blende 28 von seiner auseinander gezogenen Stellung in seine zusammengedrückte Stellung zusammengedrückt. Dadurch kann der Deckel 4 nach hinten bewegt werden.

Da der Kontaktpunkt zwischen der Blende 28 und dem Deckel 4 zurückbewegt wird, kann sich gleichzeitig der anfangs von dem Vorderende des Deckels 4 zusammengedrückte Vorderabschnitt der Blende 28 nach oben ausdehnen aufgrund der Spannkraft, die von dem Vorderende des Federelements 30 der Streckeinrichtung 29 aufgebracht wird, so daß sich die Blende 28 in eine vorne gespreizte Sektorform umwandelt, und gleichzeitig wird der Windabweiser 12 an dem Vorderabschnitt der Öffnung 3 aufgestellt. Folglich führt der Oberabschnitt der Blende 28 eine Schaukelbewegung aus, bei der sich die Blendenfunktion bzw. der gespreizte Blendenabschnitt von hinten nach vorne verlagert.

Der Windabweiser 12 glättet in seiner ausgestellten Stellung, die in Fig. 1 durch die mit jeweils zwei Punkten strichpunktierte Linie oder in Fig. 2 in der unteren C-Ansicht dargestellt ist, eine entlang einer vorderen Oberfläche des festen Daches 2 strömende Luftströmung, so daß sie aufwärts gelenkt wird, und die Luftströmung, die von der linken und der rechten Seite des Windabweiser-Grundkörpers 12a in die Öffnung 3 strömen könnte, wird durch die Blende 28 in ihrer vorne gespreizten sektorförmigen Anordnung am Einströmen gehindert.

Die in ihrer vorne gespreizten Sektorform angeordnete Blende 28 verhindert nicht nur, daß eine Luftströmung in den Fahrgastraum einströmt, sondern sie deckt auch einen deutlich sichtbaren Zwischenraum zwischen der Öffnung 3 des Daches 2 und der Innenöffnung 10 von der Innenseite des Fahrzeuginnenraumes her ab.

Zum Schließen des Deckels 4 wird die Schiebeeinrichtung 7 nach vorne in entgegengesetzter Bewegungsabfolge gegenüber derjenigen Bewegungsabfolge bewegt, die oben beim Öffnen des Deckels 4 beschrieben worden ist. Des weiteren kann die Sonnenblende 11 geöffnet oder geschlossen werden, je nachdem, ob der Deckel 4 offen oder geschlossen ist.

Auch wenn das oben beschriebene Sonnendach 1A ein äußeres oder außen geführtes Hebe-Schiebedach ist, so kann es auch als ein inneres oder innen geführtes Schiebe-Hebedach gebildet sein, bei dem der Deckel 4 aus seiner die Öffnung 3 vollständig schließenden Stellung nach oben verschwenkt wird, dann nach unten bewegt wird und aus seiner abgesenkten Stellung nach hinten bewegbar ist, indem einige Änderungen vorgenommen werden, wie zum Beispiel diejenigen, daß der Kulissenschlitz 17 in V-Form gebildet ist und ein Abstand zwischen dem Mittelrahmenteil 21 und dem festen Dach 2 größer gemacht wird. In diesem Fall können auch die Blende 28 und der Windabweiser 12 die gleichen Bewegungen, wie sie oben beschrieben sind, ausführen.

Des weiteren kann das Sonnendach 1A auch ohne jegliche Änderung in ein spoilerartiges Sonnendach umgewandelt werden, bei dem der Deckel 4 ausgestellt, jedoch nicht zurückbewegt wird.

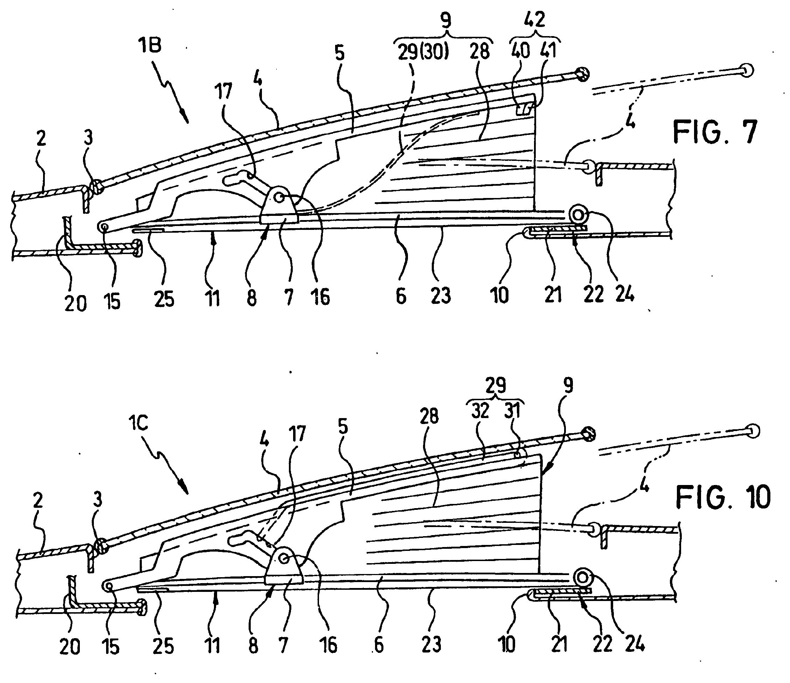

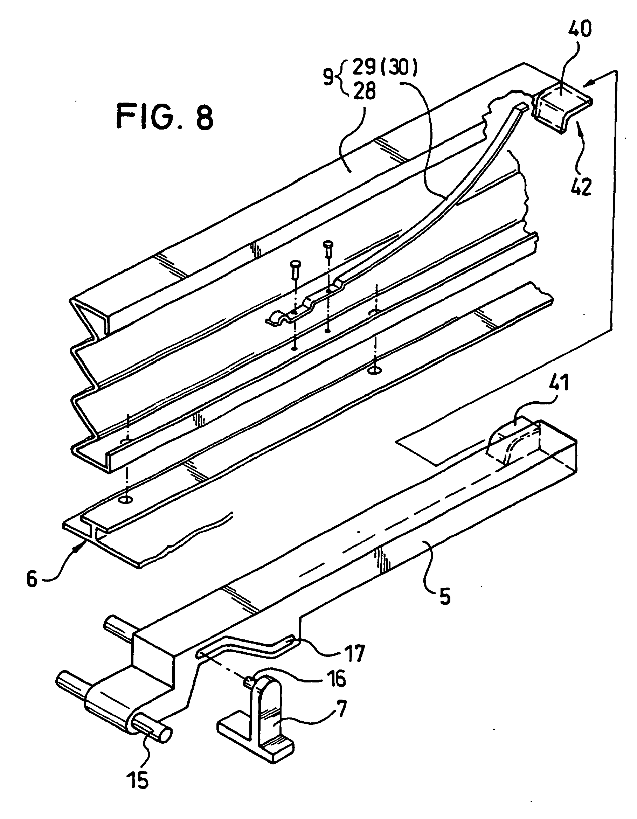

Ein Sonnendach 1B eines zweiten Ausführungsbeispiels, das in den Fig. 7 bis 9 dargestellt ist, weist keinen Windabweiser 12 auf und das Federelement 30 der Streckeinrichtung 29 ist an seinem Vorderabschnitt an dem Unterabschnitt der Blende 28 befestigt und an einem hinteren Abschnitt in Kontakt mit der Unterseite des Oberabschnitts der Blende 28.

Jeder Oberabschnitt der linken und der rechten Blende 28 ist mit der Unterseite des Deckels 4 an einer Innenseite des linken und des rechten Ausstellhebels 5 in Kontakt und an dem hinteren Oberabschnitt der Blende 28 ist eine Lagerzunge 40 gebildet, die gegen den Ausstellhebel 5 hervorsteht, und dazu entsprechend ist ein Lagerabschnitt 41 an dem Ausstellhebel 5 gebildet, der die Lagerzunge 40 von der Unterseite her aufnimmt. Somit ist eine Hilfseinrichtung 42 aus der Lagerzunge 40 und dem Lagerabschnitt 41 gebildet, die die Anhebebewegung unterstützt.

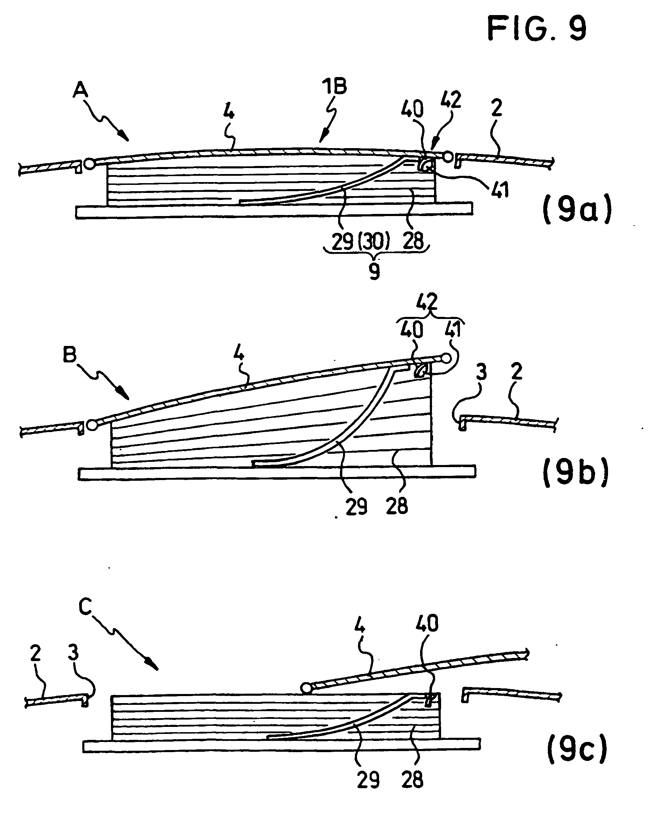

Wenn sich der Deckel 4 in seiner vollständig geschlossenen Stellung befindet (in Fig. 9 als "A"-Stellung dargestellt) oder in seiner ausgestellten Stellung (in Fig. 9 als "B"-Stellung dargestellt), ist der Lagerabschnitt 41 des Ausstellhebels 5 von der Unterseite her im Eingriff mit der Lagerzunge 40 der Blende 28, so daß der Hinterabschnitt der Blende 28 der Aufwärtsbewegung des Deckels 4, mit dem sie gekoppelt ist, folgt. Dadurch kann die Blende 28, sogar wenn starke Luftwirbel an der Blende 28 auftreten, wenn der Deckel 4 in seiner ausgestellten Position ist, diesen Luftwirbeln standhalten und ihre Stellung beibehalten.

Wenn der Deckel 4 nach hinten bewegt wird, während er seine ausgestellte Stellung beibehält, wird der Lagerabschnitt 41 von der Lagerzunge 40 getrennt, so daß sich der Hinterabschnitt der Blende 28 zusammenziehen kann. Da die Blende 28 zusammengezogen ist, wenn sich der Deckel 4 nach hinten bewegt, muß die Blende 28 an dem hinteren Oberabschnitt nicht abgestützt werden (wie in Fig. 9 als "C"-Stellung gezeigt ist).

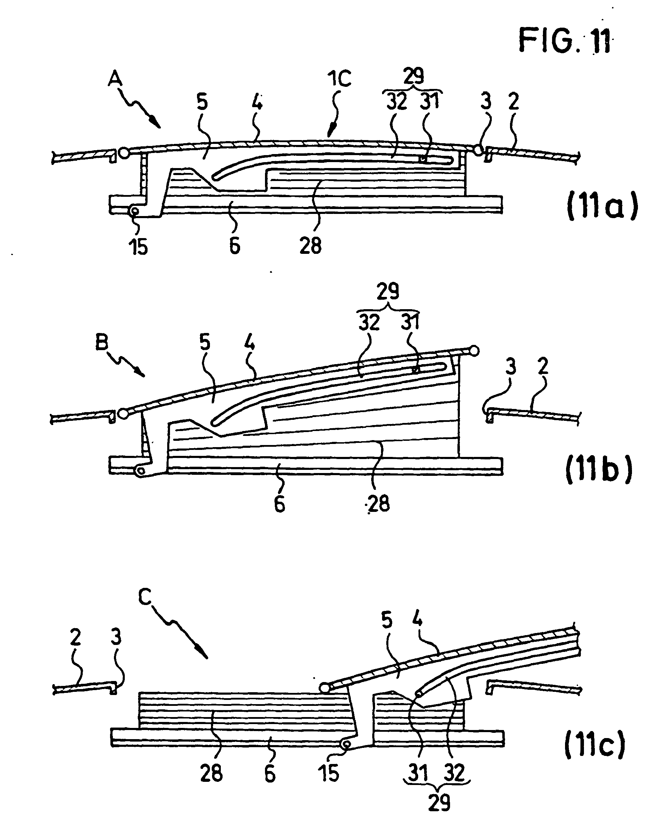

Bei einem Sonnendach 1C eines dritten Ausführungsbeispiels, das in den Figuren 10 bis 12 dargestellt ist, enthält eine Streckeinrichtung 29 ein Eingriffselement 31, das an dem hinteren Oberabschnitt der Blende 28 vorgesehen ist und eine Kulissenführung 32 aufweist, die an dem Deckel 4 oder an dem Ausstellhebel 5 ausgebildet ist, und das Federelement 30 kann vorgesehen sein oder es kann auch weggelassen sein.

Das Eingriffselement 31 besteht aus einem Stift, der in die Kulissenführung 32 eingefügt und mit einer Oberseite und einer Unterseite der Kulissenführung 32 in Kontakt ist, wobei die Kulissenführung 32 durch einen Schlitz an einem Streifenteil 43 gebildet ist, das an dem Deckel 4 oder an dem Ausstellhebel 5 befestigt ist. Alternativ kann die Kulissenführung 32 direkt an dem Ausstellhebel 5 gebildet sein. Die Kulissenführung 32 weist einen Vorderabschnitt auf, der sich nach vorne absenkt.

Wenn bei dem Sonnendach 1C der Deckel 4 aus seiner vollständig geschlossenen Stellung (in Fig. 11 als "A"-Stellung bezeichnet) angehoben wird, wird der hintere Abschnitt der Blende 28 aufgrund des Eingriffs zwischen der Kulissenführung 32 und dem Eingriffsteil bzw. dem Stift 31 angehoben, so daß die Blende 28 in eine sich hinten spreizende Sektorform ausgedehnt wird, und, wenn der Deckel 4 aus seiner angehobenen Stellung (in Fig. 11 als "B"-Stellung gezeigt) nach hinten bewegt wird, wird das Eingriffsteil 31 relativ zu der Kulissenführung 32 darin gleitend bewegt, so daß der Deckel 4 nach hinten bewegt werden kann, während die Blende 28 in ihrer Längsposition stationär bleibt (in Fig. 11 als "C"-Stellung dargestellt), jedoch wird sie zusammengezogen, indem die Höhenlage des Eingriffselements 31 über die Form der Kulissenführung 32 gesteuert wird.

Da bei dem Sonnendach 1C das Eingriffsteil 31 an dem hinteren oberen Abschnitt der Blende 28 in Kontakt mit der Oberseite und der Unterseite der Kulissenführung 32 ist und daran verschiebbar geführt ist, wird der Oberabschnitt der Blende 28 mit dem Deckel 4 in Kontakt gehalten.

Des weiteren kann das Sonnendach 1C des dritten Ausführungsbeispiels derart modifiziert werden, daß das Federelement an der Blende 28 befestigt ist und den hinteren Oberabschnitt nach oben vorspannen kann und die Kulissenführung 32 weist nur eine Oberseite auf, die mit dem Eingriffsteil 31 von der Oberseite her in Eingriff ist, so daß eine Auseinanderstreckbewegung der Blende 28 nur von dem Federelement ausgeführt werden kann und eine Zusammenziehbewegung nur von der Kulissenführung 32 gesteuert werden.

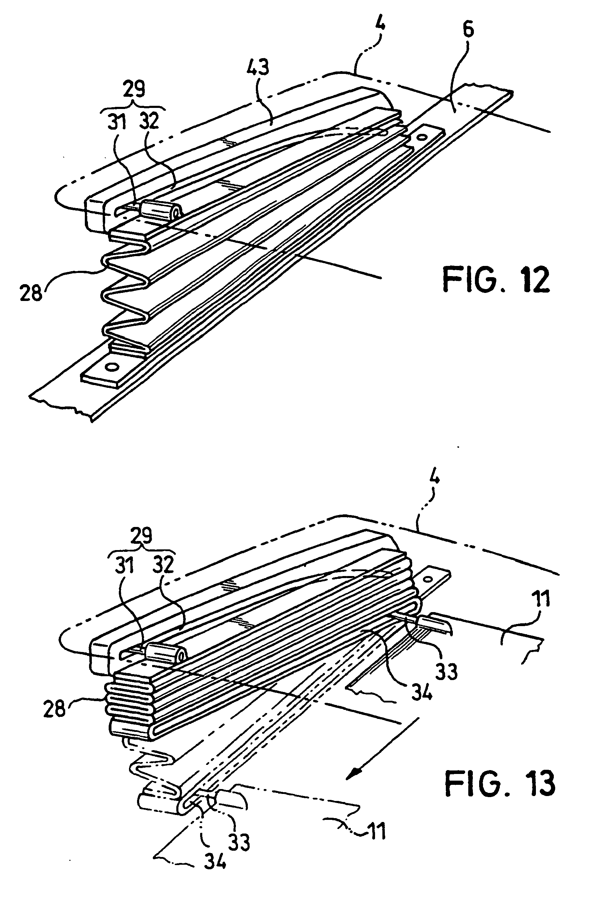

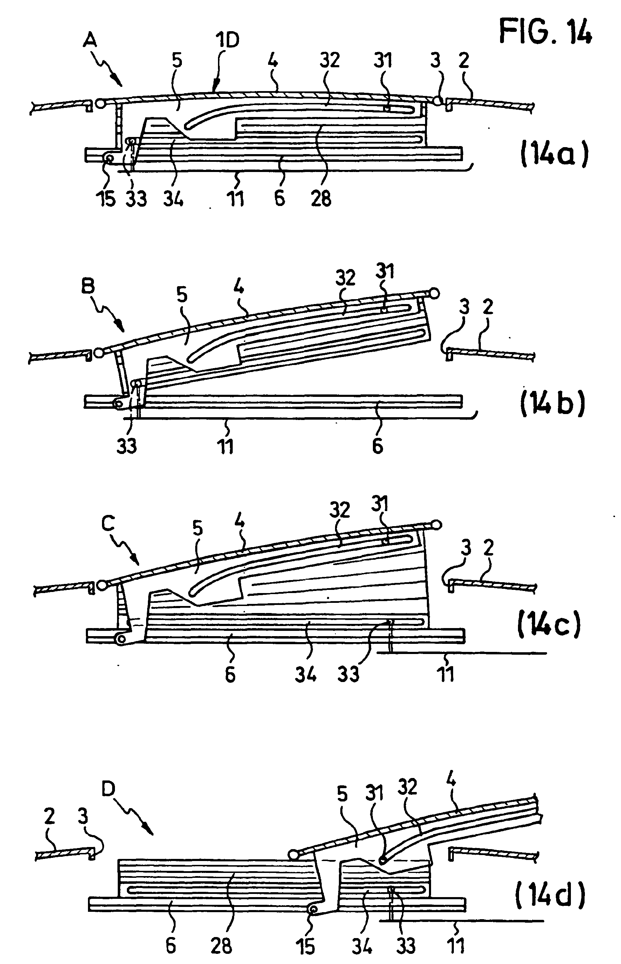

Ein Sonnendach 1D eines vierten Ausführungsbeispiels, das in den Fig. 13 und 14 dargestellt ist, ist derart gestaltet, daß der Unterabschnitt der Blende 28 des Sonnendachs 1C mittels der Sonnenschutzeinrichtung 11 gesteuert werden kann.

Bei dem Sonnendach 1D wird die Blende 28 in Längsrichtung stationär gehalten und an einem vorderen unteren Abschnitt ist sie um eine Querachse schwenkbar gelagert, so daß ein hinterer Abschnitt angehoben werden kann, und ein Eingriffsschlitz 34 ist über annähernd die gesamte Länge eines Unterabschnitts der Blende 28 gebildet und ist mit einem Eingriffsvorsprung 33 im Eingriff, der an der vorderen Lagerachse 25 der Sonnenschutzeinrichtung 11 befestigt ist. Sowohl der Eingriffsvorsprung 33 als auch der Eingriffsschlitz 34 sind somit Komponenten der Streckeinrichtung 29.

Wenn der Deckel 4 aus seiner vollständig geschlossenen Stellung (aus einer Stellung, die in Fig. 13 mit durchgezogener Linie oder in Fig. 14 als "A"-Stellung bezeichnet ist, in eine angehobene Position, die in Fig. 14 als "B"-Stellung gezeigt ist) angehoben wird, während die Sonnenschutzeinrichtung 11 in ihrer geschlossenen Position gehalten wird, wird der hintere Abschnitt der Blende 28 aufgrund des Eingriffs zwischen der Kulissenführung 32 und dem Eingriffsteil 31 angehoben. Dabei wird die Blende 28 an ihrem hinteren Abschnitt in einem über die ganze Länge zusammengezogenen Zustand angehoben und, wenn der Deckel 4 aus der ausgestellten Stellung (von der C-Stellung zu der D-Stellung gemäß Fig. 14) zurückbewegt wird, wird das Eingriffsteil 31 relativ zu der Kulissenführung 32 nach hinten verschoben, so daß der Deckel 4 nach hinten bewegt werden kann, während die Blende 28 in ihrer Längsposition stationär bleibt, während jedoch der hintere Abschnitt der Blende 28 durch Steuerung der Höhenlage des Eingriffsteils 31 mittels der Form der Kulissenführung 32 abwärts gezogen wird.

Wenn die vordere Lagerachse 25 zurückbewegt wird, um die Sonnenschutzeinrichtung 11 zu öffnen, während der Deckel 4 in seiner angehobenen Stellung ist (von der B-Stellung zu der C-Stellung in der Fig. 14), wird der Eingriffsvorsprung 33 in dem Eingriffsschlitz 34 bewegt, während er eine konstante Höhenlage bezüglich der Führungsschiene 6 beibehält, so daß der Unterabschnitt der Blende 28 mit seinem angehobenen Hinterabschnitt schnell abwärts gezogen wird, so daß er sich entlang der Führungsschiene 6 erstreckt, und um die Blende 28 in eine sich hinten aufspreizende Sektorform auszudehnen.

Bei dem Sonnendaches 1D ist die Blende 28 derart gestaltet, daß sie nicht auseinandergezogen wird, wenn die Sonnenschutzeinrichtung 11 geschlossen wird, da die Blendenfunktion unter dieser Bedingung nicht notwendig ist, während die Blende 28 auseinandergezogen wird, um ihre eigene Blendenfunktion auszuführen, wenn die Sonnenschutzeinrichtung 11 zwischen einer geringfügig geöffneten Stellung und einer vollständig geöffneten Stellung angeordnet ist.

Wenn der Deckel 4 angehoben wird, nachdem die Sonnenschutzeinrichtung 11 geöffnet worden ist, das heißt, nachdem der Eingriffsvorsprung 33 zurückbewegt worden ist, ist des weiteren eine volle Länge des unteren Abschnitts der Blende 28 an der Führungsschiene 6 stationär gehalten und ähnlich zu jedem der vorangegangenen Ausführungsbeispiele beginnt sich der hintere Abschnitt der Blende 28 schon beim anfänglichen Anheben des Deckels 4 auseinander zu ziehen.

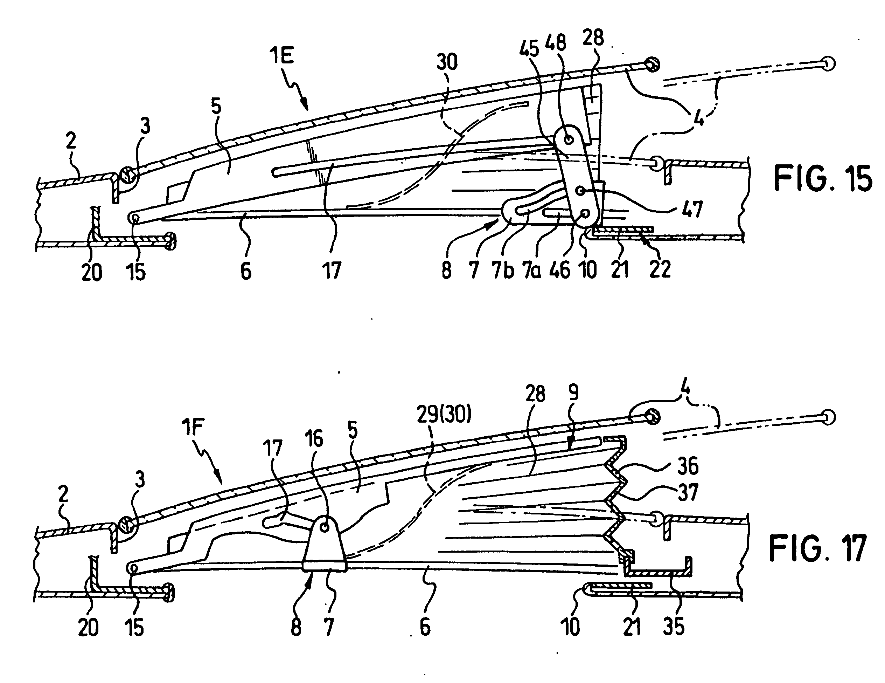

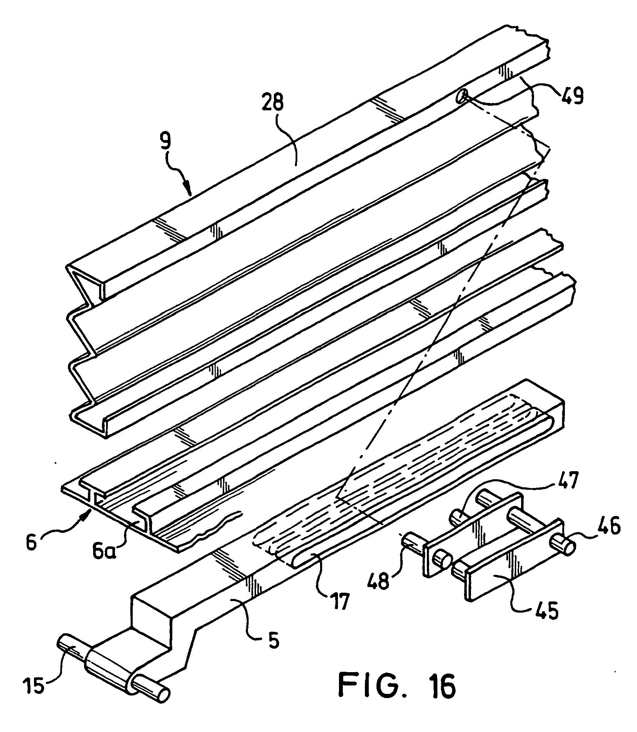

Ein Sonnendach 1E eines fünften Ausführungsbeispiels, das in den Fig. 15 und 16 dargestellt ist, unterscheidet sich von dem Sonnendach des zweiten Ausführungsbeispiels durch seine Antriebseinrichtung 8.

Die Antriebseinrichtung 8 des Sonnendachs 1E enthält eine Hubgelenkeinrichtung 45 zwischen dem Ausstellhebel 5 und dem Gleiter 7. Die Hubgelenkeinrichtung 45 weist drei Stifte 46, 47 und 48 auf, wobei die unteren zwei Stifte 46 und 47 jeweils mit Führungsschlitzen 7a und 7b im Eingriff sind, die an dem Gleiter 7 gebildet sind, und der obere Stift 48 mit einem Kulissenschlitz 17 im Eingriff ist, der an dem Ausstellhebel 5 gebildet ist, sowie auch mit einer Öffnung 49, die an dem Oberabschnitt der Blende 28 gebildet ist.

Da die Spann- oder Streckeinrichtung 29 derart konfiguriert ist, daß sie den oberen Stift 48 und die Öffnung 49 anstelle des Eingriffselements 39 und den Kulissenschlitz 17 anstelle der Kulissenführung 32 aufweist, muß das Federelement 30 nicht notwendigerweise vorgesehen sein. Da die Öffnung 49 der Blende 28 mit dem oberen Stift 48 in Eingriff ist, der wiederum im Eingriff und in Kontakt ist mit dem Kulissenschlitz 17, ist der Oberabschnitt der Blende 28 mit dem Deckel 4 in Kontakt, wodurch eine relative Gleitbewegung zwischen der Blende 28 und dem Deckel 4 in Längsrichtung möglich ist.

Wenn der Gleiter 7 nach vorne bewegt wird, während der Deckel 4 in seiner vollständig geschlossenen Position ist, hebt sich die Hubgelenkeinrichtung 45 nach oben, um den hinteren Abschnitt des Deckels 4 anzuheben und um die Blende 28 auseinander zu ziehen und wenn der Ausstellhebel 5 nach hinten bewegt wird, während der Deckel 4 in seiner ausgestellten Stellung gehalten wird, wird der Stift 48 relativ zu dem Kulissenschlitz 17 und von diesem geführt bewegt und der Deckel 4 wird nach hinten bewegt, während die Blende 28 in Längsrichtung stationär bleibt und gleichzeitig senkt sich die Hubgelenkeinrichtung 45 ab, um den hinteren Abschnitt der Blende 28 zusammenzuziehen.

In zu dem ersten Ausführungsbeispiel vergleichbarer Weise können auch das zweite bis fünfte Ausführungsbeispiel als innen geführtes Schiebe-Hebedach durch Modifizierung der Antriebseinrichtung 8 konfiguriert werden.

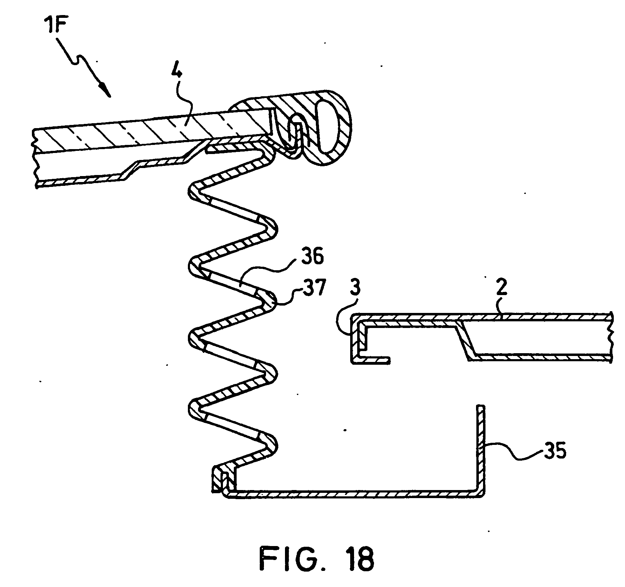

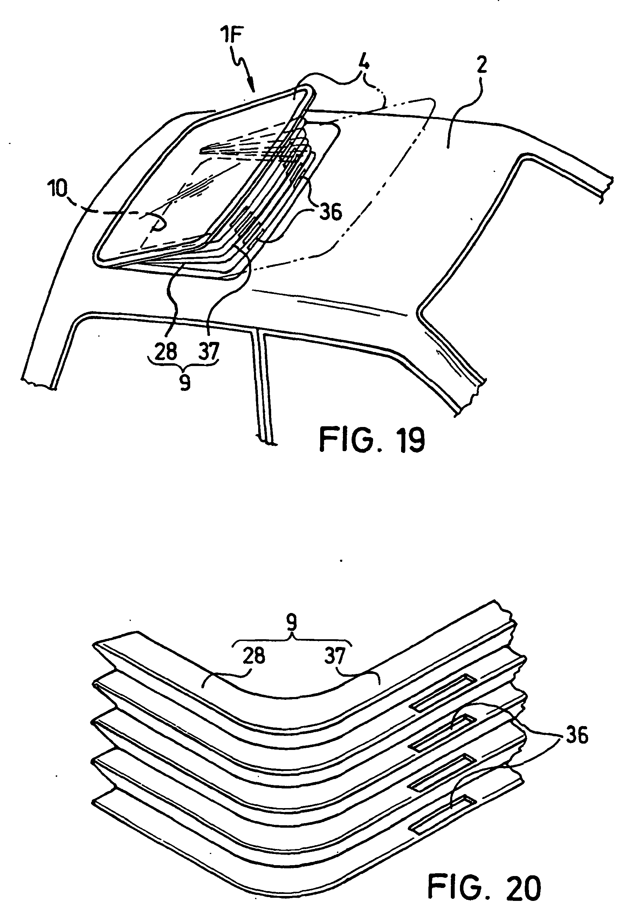

Ein Sonnendach 1F eines sechsten Ausführungsbeispiels, das in den Fig. 17 bis 20 dargestellt ist, unterscheidet sich von dem Sonnendach des zweiten Ausführungsbeispiels durch die Blendeneinrichtung 9, bei der eine Ablaufrinne 35 als wasseraufnehmendes Tragteil oberhalb des mittleren Rahmenteils 21 vorgesehen ist.

Die Blendeneinrichtung 9 enthält nicht nur die linke und die rechte Blende 28, sondern auch eine hintere Blende 37, deren unterer Abschnitt an einem Frontabschnitt der Wasserrinne 35 befestigt ist, deren Oberabschnitt benachbart zu dem Deckel 4 angeordnet ist, und deren Mittelabschnitt zumindest eine darin ausgebildete Belüftungsöffnung 36 aufweist.

Auch wenn die hintere Blende 37 getrennt von der linken und der rechten Blende 28 hergestellt werden kann und dann mit diesen verbunden werden kann, ist die hintere Blende 37 des vorliegenden Ausführungsbeispiels mit diesen integral gebildet, indem eine einzelne Lage eines vertikalen Faltenbalgteils etwa in C-Form (in Draufsicht) umgebogen wird und indem die zumindest eine Belüftungsöffnung 36 an einer Rückseite gebildet wird. Schließlich wird die hintere Blende 37 mit der linken und der rechten Blende 28 verbunden.

Wenn diese Blendeneinrichtung 9 auch eine hintere Blende 37 aufweist, so läßt sie es dennoch zu, daß der Deckel 4 nach hinten oder nach vorne bewegt werden kann, wie bei den oben beschriebenen ersten bis fünften Ausführungsbeispielen, und sie sichert die Belüftung des Fahrzeuginnenraumes, wenn der Dekkel 4 in seiner ausgestellten Position ist und sie verhindert des weiteren, daß aufgrund der hinteren Blende 37 Regenwasser, das von dem festen Dach 2 auf die Regenrinne 35 tropft, in die Innenöffnung 10 hineinspritzen kann.

Da das obere Ende der hinteren Blende 37 oberhalb der Oberfläche des festen Daches 2 angeordnet ist, wenn der Deckel 4 ausgestellt wird, wird die Spritzwasser-Abhaltefunktion der hinteren Blende 37 im Vergleich mit der konventionellen Blende verbessert, bei der eine rippenförmige Spritzwasser-Abhalteeinrichtung an einem Vorderabschnitt der Regenrinne 35 vorgesehen ist.

Wenn der Deckel 4 ein außen geführtes Hebe-Schiebedach ist, ist die Regenrinne 35 an der Führungsschiene 6 oder der Unterseite des festen Daches 2 befestigt, während im Falle des innen geführten Schiebe-Hebedaches die Regenrinne 35 an der Führungsschiene 6 gelagert ist, so daß sie von dem Gleiter 7 nach hinten und nach vorne bewegt werden kann.

Der Unterabschnitt der hinteren Blende 37 kann an einem Lagerteil, z. B. einer Klammer, angebracht sein, das von dem Rahmen 22, dem festen Dach 2 oder einem Rollschutzteil der Leinwand 23 der Sonnenschutzeinrichtung 11 in einer Position, in der sich ein Hinterabschnitt des Deckels 4 in seiner vollständig geschlossenen Position befindet, angebracht sein, und in diesem Fall kann, wenn die Regenrinne 35 getrennt vorgesehen ist, der Mittelabschnitt der hinteren Blende 37 benachbart zu einer vorderen Oberseite der Regenrinne 35 angeordnet sein, so daß verhindert wird, daß Regenwasser in den Fahrzeuginnenraum spritzen kann. Wenn die hintere Blende 37 mit der linken und der rechten Blende 28 integral gebildet ist und an ihrem unteren Abschnitt mit dem Rahmen 22 verbunden ist, weist die Blende 28 eine höhere Festigkeit auf.

Gemäß der vorliegenden Erfindung wird, wenn der Deckel 4 mittels des Ausstellhebels 5 angehoben wird, die faltenbalgartige Blende 28 mittels der Streckeinrichtung 29 auseinander gezogen und dadurch verbirgt die Blende 28 die Antriebseinrichtung 8 oder eine ähnliche Einrichtung und die Blende 28 dient als Schutz gegen Luftzug von außen, so daß kein Luftzug in den Fahrgastraum eindringen kann, und wenn der Deckel 4 zurückgeschoben wird, wird des weiteren die Blende zusammengezogen, jedoch verbleibt sie in ihrer Längsposition, um einen gewissen Grad an Schutzfunktion beizubehalten, und schließlich kann dieses System nicht nur bei inneren oder innen geführten Schiebe-Hebedächem, sondern auch bei äußeren oder außen geführten Hebe-Schiebedachern verwendet werden.

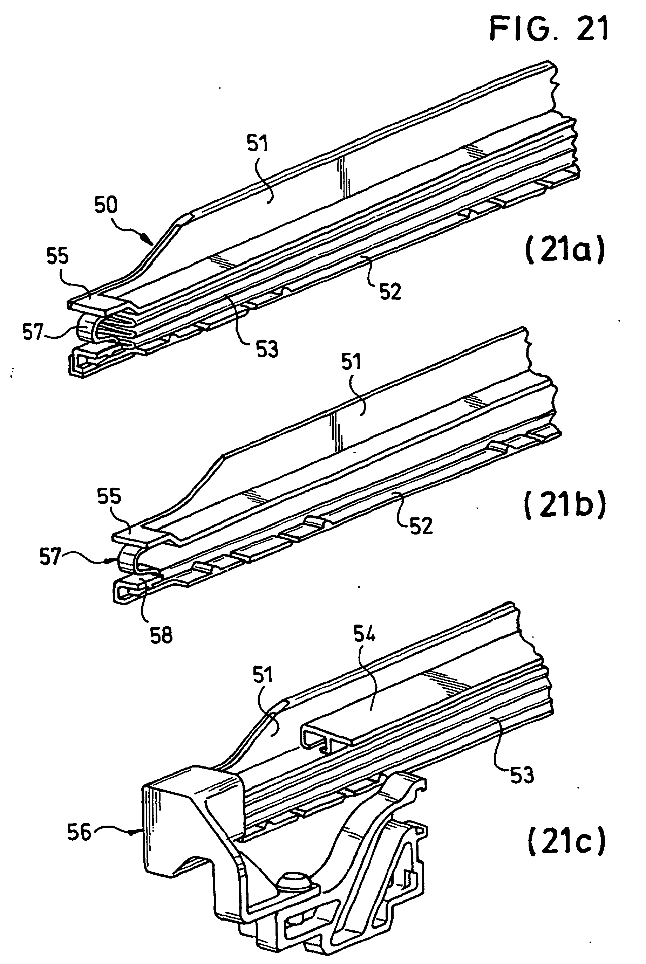

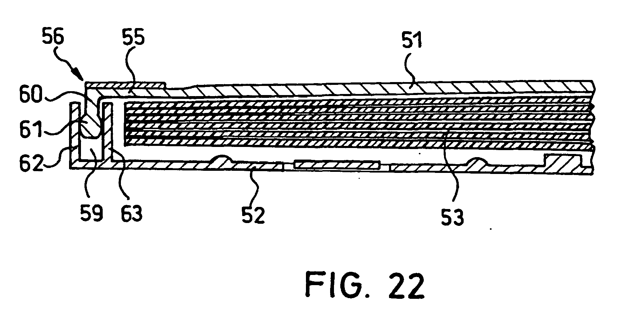

Ein weiteres Ausführungsbeispiel des Sonnendaches, das beispielsweise eine Abwandlung des ersten Ausführungsbeispiels ist, enthält eine Blendenanordnung 50 (siehe Fig. 21 und 22) mit einem Blendenoberteil 51 und einem Blendenunterteit 52 und einem dazwischen angeordneten Faltenbalg 53 (siehe Fig. 21a), der mit dem Blendenoberteil 51 und dem Blendenunterteil 52 fest verbunden ist. Das Blendenunterteil 52 ist an einem Teil des festen Daches 2, wie z. B. der Führungsschiene 6 oder einem Dachrahmen, fest angebracht. Das Blendenoberteil 51 ist an einer am Deckel 4 angebrachten Führungsschiene 54 (siehe Fig. 21 c) längsverschiebbar gelagert. Das Blendenoberteil 51 ist an seinem Vorderende 55 in einer dachfesten Lagereinrichtung 56 (siehe Fig. 21 c) derart gelagert, daß es in vertikaler Richtung über einen festgelegten Ausgleichsweg bewegbar ist, z. B. um eine Anpaßbewegung in vertikaler Richtung auszuführen, wenn der Deckel 4 ausgestellt wird. Das Vorderende 55 des Blendenoberteils 51 ist beispielsweise durch eine Feder 57 nach oben vorgespannt. Die Feder 57 kann als gebogene Blattfeder gebildet sein, die das Vorderende 55 des Blendenoberteils 51 mit dem Vorderende 58 des Blendenunterteils 52 miteinander flexibel verbindet (siehe Fig. 21 b, in der der Faltenbalg 53 nicht dargestellt ist).

Fig. 22 zeigt eine Ausführungsform, bei der die Lagereinrichtung 56 einen oben geöffneten Aufnahmeraum 59 für ein von dem Vorderende 55 des Blendenober teils 51 nach unten abstehendes Halteteil 60 aufweist. Das Halteteil 60 enthält einen verdickten Haltekopf 61, der zwischen den beiden Wänden 62 und 63 der Lagereinrichtung 56 in Längsrichtung fest gehalten ist, sich jedoch in vertikaler Richtung innerhalb eines festgelegten Weges bewegen kann. Des weiteren kann der Haltekopf 61 um eine Querachse (senkrecht zur Bildebene) verschwenkt werden, um auf diese Weise eine Anpaßbewegung des Blendenoberteils 51 zu ermöglichen.

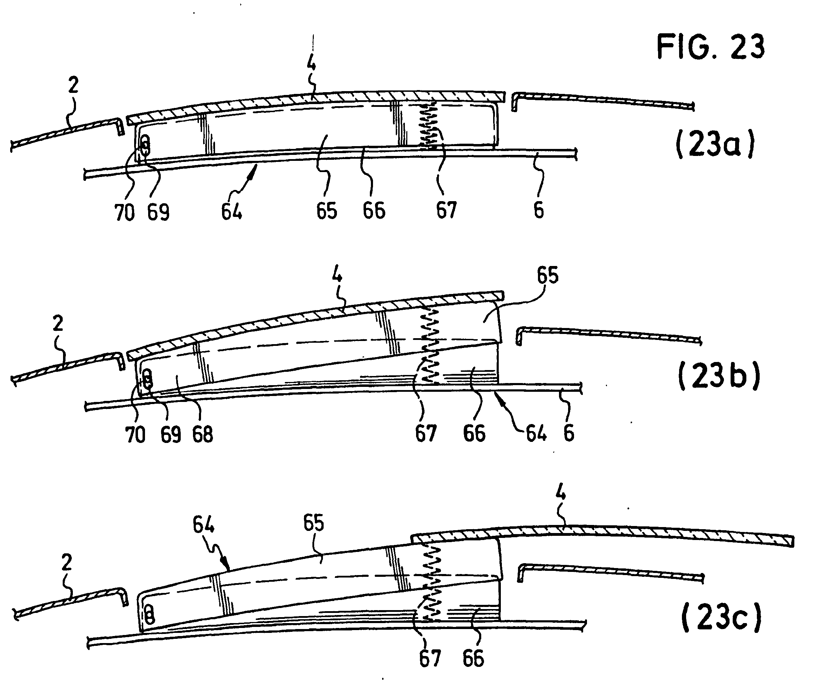

Die Fig. 23 a bis c zeigen eine Ausführungsform einer Blende 64 in der Art einer Scheren- oder Fächerblende mit einem nach oben bewegbaren Blendenoberteil 65 und einem dachfesten Blendenunterteil 66. Das Blendenoberteil 65, das einen steifen oberen Rand enthält, wird durch eine Federeinrichtung 67 mit zumindest einer Feder gegen die Unterseite des Deckels 4 gedrückt. Wenn der ausgestellte Deckel 4 nach hinten verschoben wird, gleitet er entlang dem Blendenoberteil 65. Das Blendenoberteil 65 ist an seinem Vorderende 68 schwenkbar und um einen festgelegten Weg in vertikaler Richtung bewegbar gelagert, so daß es beim Ausstellen des Deckels 4 eine erforderliche Anpaßbewegung ausführen kann und damit über seine ganze Länge an der Unterseite des Deckels 4 anliegt Die vordere Lagerung des Blendenoberteils 65 ist z. B. durch einen vertikalen Schlitz 69 im Blendenoberteil 65 gebildet, in dem ein dachfester Zapfen 70 aufgenommen ist.

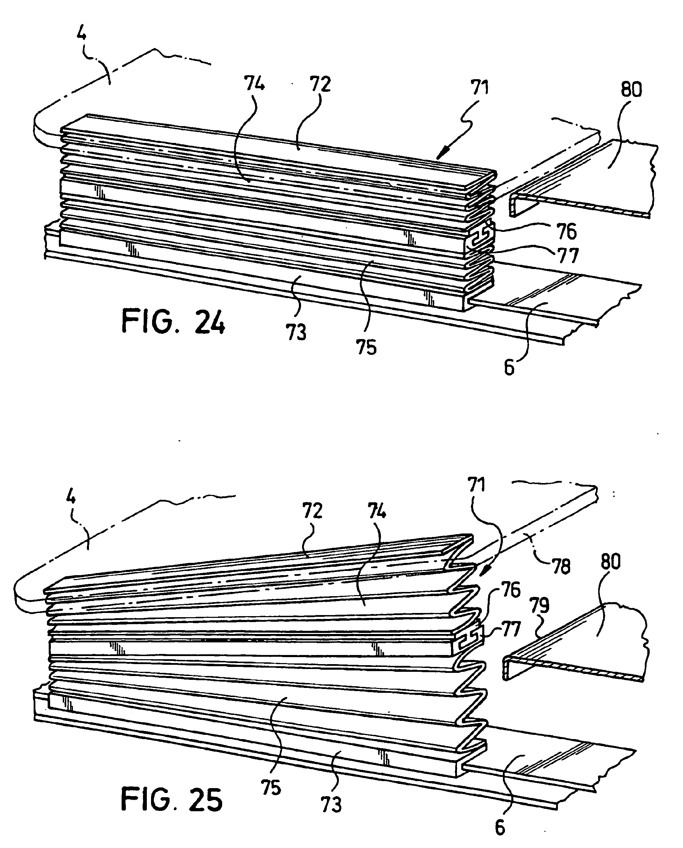

Ein weiteres abgewandeltes Ausführungsbeispiel des Sonnendaches enthält eine geteilte Blende 71 (siehe Fig. 24 bis 26) mit einem Blendenoberteil 72 und einem Blendenunterteil 73, die jeweils ein oberes Faltenbalgteil 74 bzw. ein unteres Faltenbalgteil 75 aufweisen. Das obere und das untere Faltenbalgteil 74 bzw. 75 sind miteinander längsverschiebbar verbunden, beispielsweise über zwei aneinander geführte Schienen 76 und 77, die an dem oberen bzw. dem unteren Faltenbalgteil 74 bzw. 75 angebracht oder ausgebildet sind. Das Blendenoberteil 72 und das Blendenunterteil 73 sind an dem Deckel 4 bzw. an der dachfesten Führungsschiene 6 fest angebracht.

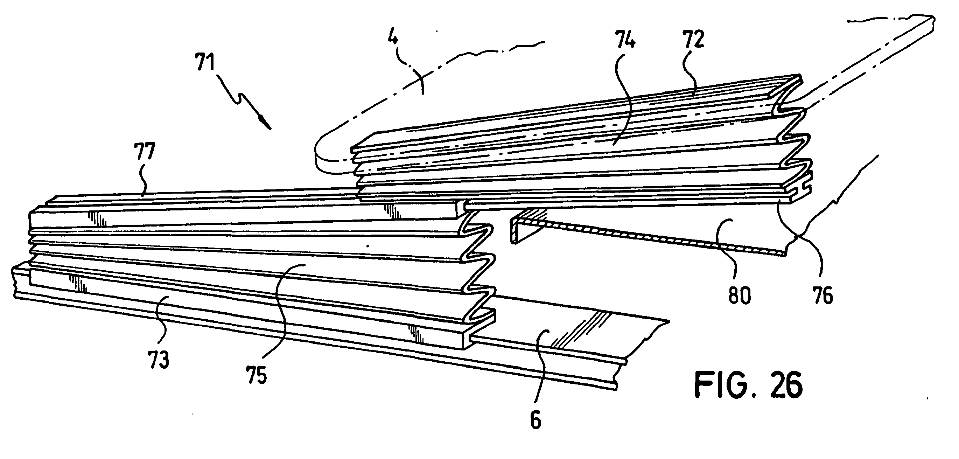

Beim Ausstellen des Deckels 4 (siehe Fig. 25) expandieren die beiden elastisch zusammengedrückten Faltenbalgteile 74 und 75 am Hinterrand 78 des Deckels 4 aufgrund ihrer Spannkraft derart, daß die beiden miteinander verbundenen Schienen 76 und 77 über den Vorderrand 79 der hinteren Dachhaut 80 angehoben sind. Wenn der Deckel 4 in seiner ausgestellten Position nach hinten bewegt wird (Fig. 26), nimmt er das obere Faltenbalgteil 74 mit, wobei dessen Unterrand bzw. die daran gebildete Schiene 76 an der Schiene 77 des unteren Faltenbalgteils 75 geführt nach hinten verschoben wird.

Die hintere Dachhaut 80 kann auch ein zweiter Deckel des Daches 2 sein. Die Faltenbalgteile 74 und 75 sind beispielsweise aus einem federelastischen Material wie Gummi oder einem entsprechenden Kunststoff hergestellt. Die Schienen 76 und 77 können z. B. durch Anspritzen an das untere Faltenbalgteil 73 bzw. das obere Faltenbalgteil 74 einstückig mit diesen hergestellt sein. Durch die elastische Spannung des Materials führen die beiden Faltenbalgteile 73, 74 eine gleichmäßige Ausstellbewegung aus. Eine Einrichtung zum Ausstellen der beiden aneinander gelagerten Schienen bei ausgestelltem Deckel 4 ist nicht erforderlich.

Die Blende kann eine Scheren- oder Fächerblende sein und kann auch aus Stoff oder einem anderen Material ohne federelastische Eigenschaften gebildet sein. In diesem Fall ist eine Einrichtung zum Anheben und Ausstellen der beiden aneinander gelagerten Schienen vorgesehen, z. B. eine Mechanik, die beim Ausstellen des Deckels mitbewegt wird.

Es wird angemerkt, daß die vorliegende Erfindung nicht auf die beschriebenen Ausführungsbeispiele beschränkt ist, sondern geändert und modifiziert werden kann. Beispielsweise kann die Kombination der jeweiligen Abschnitte des ersten bis sechsten Ausführungsbeispiels geändert werden und ein Teflonstreifen kann an einer Gleitkontaktoberfläche zwischen dem Deckel 4 und der Blende 28 befestigt sein, um den Reibungswiderstand zu reduzieren.

### Bezugszeichenliste

- 1: Sonnendach
- 2: festes Dach
- 3: Öffnung
- 4: Deckel
- 5: Ausstelleinrichtung
- 6: Führungsschiene
- 7: Schiebeeinrichtung
- 7a: Führungsschlitz
- 7b: Führungsschlitz
- 8: Antriebseinrichtung
- 9: Blendeneinrichtung
- 10: Innenöffnung
- 11: Sonnenschutzeinrichtung
- 12: Windabweiser
- 12a: Grundkörper
- 12b: Halteteil
- 13 14 15: Gleitschuh
- 16: Stift
- 17: Kulissenschlitz
- 18 19 20: vorderes Rahmenteil
- 21: mittleres Rahmenteil
- 22: Tragrahmen
- 23: Stoffbahn
- 24: Wickelwelle
- 25: Auszugstange
- 26 28: Blende
- 29: Streckeinrichtung
- 30: Federteil
- 31: Eingriffselement
- 32: Kulissenführung
- 33: Eingriffsvorsprung
- 34: Eingriffsschlitz
- 35: Ablaufrinne
- 36: Belüftungsöffnung
- 37: hintere Blende
- 38 39: Eingriffselement
- 40: Lagerzunge
- 41: Lagerabschnitt
- 42: Hilfseinrichtung
- 43: Streifenteil
- 44 45: Hubgelenkeinrichtung
- 46: Stift
- 47: Stift
- 48: Stift
- 49: Öffnung
- 50: Blendenanordnung
- 51: Blendenoberteil
- 52: Blendenunterteil
- 53: Faltenbalg
- 54: Führungsschiene
- 55: Vorderende
- 56: Lagereinrichtung
- 57: Feder
- 58: Vorderende
- 59: Aufnahmeraum
- 60: Halteteil
- 61: Haltekopf
- 62: Wand
- 63: Wand
- 64: Blende
- 65: Blendenoberteil
- 66: Blendenunterteil
- 67: Federeinrichtung
- 68: Vorderende
- 69: Schlitz
- 70: Zapfen
- 71: Blende
- 72: Blendenoberteil
- 73: Blendenunterteil
- 74: oberes Faltenbalgteil
- 75: unteres Faltenbalgteil
- 76: Schiene
- 77: Schiene
- 78: Hinterrand
- 79: Vorderrand
- 80: Dachhaut

## Patentansprüche

1. Sonnendach eines Fahrzeugs enthaltend:
einen Deckel (4) zum Freigeben oder Schließen einer in einem festen Dach (2) gebildeten Öffnung (3),
eine linke und eine rechte Führungsschiene (6) zum Lagern des Deckels (4),
eine Antriebseinrichtung (8) zum Ausstellen oder Absenken und zum Vorwärts- und Rückwärtsverschieben des Deckels (4), und
eine jeweilige Blendeneinrichtung (9), die vertikal auseinanderziehbar ist und die Antriebseinrichtung (8) von innen her abdeckt, während der Deckel (4) angehoben ist,
**dadurch gekennzeichnet,**
**daß** die Blendeneinrichtung (9) derart angeordnet ist, daß sie bezüglich der jeweiligen Führungsschiene (6) in Längsrichtung festgelegt ist, während der Deckel (4) derart angeordnet ist, daß er bezüglich der Blendeneinrichtung (9) in Längsrichtung bewegbar ist.

2. Sonnendach nach Anspruch 1,
**dadurch gekennzeichnet,**
**daß** ein linker und ein rechter Ausstellhebel (5) mit dem Deckel (4) verbunden sind, deren jeweiliger Vorderabschnitt an der linken bzw. rechten Führungsschiene (6) in Längsrichtung verschiebbar gelagert sind, die Antriebseinrichtung (8) zum Anheben oder Absenken und zum Vorwärts- oder Rückwärtsverschieben der beiden Ausstellhebel (5) bezüglich der beiden Führungsschienen (6) vorgesehen ist, wobei die Blendeneinrichtung (9) eine Blende (28) enthält, die in vertikaler Richtung auseinanderziehbar ist und an ihrem Unterabschnitt an jeder Führungsschiene (6) befestigt ist, so daß sie in Längsrichtung nicht bewegbar ist, und
**daß** eine Streckeinrichtung (29) vorgesehen ist, die einen Oberabschnitt der Blende (28) mit dem Deckel (4) derart in Kontakt bringt, daß sie gegenüber dem Deckel (4) in Längsrichtung bewegbar ist,
wobei die Streckeinrichtung (29) den Oberabschnitt der Blende (28) mit dem Deckel (4) in Kontakt bringt, auch wenn der Deckel (4) in seiner angehobenen Position ist.

3. Sonnendach nach Anspruch 1 oder 2,
**dadurch gekennzeichnet,**
**daß** die Blende (28) in der Art eines Faltenbalges gebildet ist.

4. Sonnendach nach einem der Ansprüche 1 bis 3,
**dadurch gekennzeichnet,**
**daß** die Blendeneinrichtung (9) ein Federelement (30) zum Andrücken eines hinteren Oberabschnitts der Blende (28) gegen den Deckel (4) enthält.

5. Sonnendach nach einem der Ansprüche 1 bis 4,
**dadurch gekennzeichnet,**
**daß** die Blendeneinrichtung (9) ein Eingriffselement (31) enthält, das an dem hinteren Oberabschnitt der Blende (28) angeordnet ist, und daß der Deckel (4) mit einer Kulissenführung (32) versehen ist, die mit dem Eingriffselement (31) im Eingriff ist und das Eingriffselement (31) nach unten drückt, wenn der Deckel (4) zurückbewegt wird.

6. Sonnendach nach einem der Ansprüche 1 bis 5,
**dadurch gekennzeichnet,**
**daß** die Blendeneinrichtung (9) ein Eingriffselement (31) enthält, das an dem hinteren Oberabschnitt der Blende (28) angeordnet ist, und daß der Deckel (4) mit einer Kulissenführung (32) versehen ist, die mit dem Eingriffselement (31) derart in Eingriff ist, daß das Eingriffselement (31) angehoben wird, wenn der Deckel (4) angehoben wird, und daß das Eingriffselement (31) abgesenkt wird, wenn der Deckel (4) nach vorne bewegt wird.

7. Sonnendach nach einem der Ansprüche 1 bis 6,
**dadurch gekennzeichnet,**
**daß** ein Sonnenschutz (11) vorgesehen ist zum Freigeben oder Verschließen einer Innenöffnung (10), die unterhalb der Öffnung (3) im festen Dach (2) gebildet ist, wobei ein Vorderabschnitt des Sonnenschutzes (11) an den Führungsschienen (6) in Längsrichtung bewegbar gelagert ist und einen Eingriffsvorsprung (33) aufweist, und daß die Blende (28) an einem vorderen Unterabschnitt an der Führungsschiene (6) gelagert ist, so daß sie um eine Querachse schwenkbar ist, und
**daß** die Blende (28) an ihrer Unterseite einen Eingriffsschlitz (34) aufweist, mit dem der Eingriffsvorsprung (33) im Eingriff ist, so daß er in Längsrichtung bewegbar ist.

8. Sonnendach nach einem der Ansprüche 1 bis 7,
**dadurch gekennzeichnet,**
**daß** ein Halteteil (35) unterhalb des Deckels (4) an einer Stelle angeordnet ist, die in etwa einem Hinterabschnitt des Deckels (4) in seiner vollständig geschlossenen Position entspricht, und
**daß** eine zumindest eine Belüftungsöffnung (36) enthaltende hintere Blende (37) an ihrem Unterende an dem Halteteil (35) angebracht ist,
wobei ein Oberende der hinteren Blende (37) in der Nähe des Deckels (4) angeordnet ist, so daß sie relativ zu diesem bewegbar ist.

9. Sonnendach nach Anspruch 8,
**dadurch gekennzeichnet,**
**daß** die hintere Blende (37) mit den beiden seitlichen Blenden (28), die rechts und links von der Blende (37) angeordnet sind, integral gebildet ist.

10. Sonnendach nach einem der Ansprüche 1 bis 9,
**dadurch gekennzeichnet,**
**daß** ein Unterabschnitt (52) der Blende (50) am festen Dach (2) festgelegt ist,
**daß** ein Oberabschnitt (51) der Blende (50), der am Deckel (4) verschiebbar gelagert ist, an seinem Vorderende (55) in einer dachfesten Lagereinrichtung (56) gehalten ist, die dem Vorderende (55) des Oberabschnitts (51) der Blende (50) eine vertikale Ausgleichsbewegung gestattet.

11. Sonnendach nach Anspruch 10,
**dadurch gekennzeichnet,**
**daß** ein Halteteil (60, 61) des Oberabschnitts (51) der Blende (50) in einer Aufnahme (59) der Lagereinrichtung (56) gehalten ist.

12. Sonnendach nach Anspruch 11,
**dadurch gekennzeichnet,**
**daß** die beiden Vorderenden (55 und 58) des Unterabschnitts (52) der Blende (50) bzw. des Oberabschnitts (51) der Blende (50) über ein elastisches Element (57) miteinander verbunden sind.

13. Sonnendach eines Fahrzeugs enthaltend:
einen Deckel (4) zum Freigeben oder Schließen einer in einem festen Dach (2) gebildeten Öffnung (3),
eine linke und eine rechte Führungsschiene (6) zum Lagern des Deckels (4),
eine Antriebseinrichtung (8) zum Ausstellen oder Absenken und zum Vorwärts- und Rückwärtsverschieben des Deckels (4), und
eine jeweilige Blende, die vertikal auseinanderziehbar ist und die Antriebseinrichtung (8) von innen her abdeckt, während der Deckel (4) angehoben ist,
**dadurch gekennzeichnet,**
**daß** die Blende (71) in einen Oberabschnitt (72, 74) und in einen Unterabschnitt (73, 75) unterteilt ist, die miteinander verbunden und in Längsrichtung gegeneinander verschiebbar sind, und
**daß** der Oberabschnitt (72) der Blende (71) an dem Deckel (4) und der Unterabschnitt (73) am festen Dach (2, 6) festgelegt ist.

14. Sonnendach nach einem der Ansprüche 1 bis 13,
**dadurch gekennzeichnet,**
**daß** die Antriebseinrichtung (8) den Deckel (4) derart bewegt, daß er aus seiner vollständig geschlossenen Stellung angehoben und in seiner angehobenen Stellung nach hinten verschoben wird.

15. Sonnendach nach einem der Ansprüche 1 bis 14,
**dadurch gekennzeichnet,**
**daß** die Antriebseinrichtung (8) den Deckel (4) derart bewegt, daß er aus seiner vollständig geschlossenen Stellung anhebbar und wieder absenkbar ist und in seiner abgesenkten Stellung nach hinten bewegbar ist.

## Claims

1. Sunroof for a vehicle, containing:
a panel (4) for opening or closing an opening (3) formed in a solid roof (2),
a left-hand and a right-hand guide rail (6) for mounting the panel (4),
a drive device (8) for raising or lowering the panel (4) and displacing it forwards and rearwards, and
a respective shielding device (9), which can be pulled apart vertically and covers the drive device (8) from the inside as the panel (4) is raised,
**characterized**
**in that** the shielding device (9) is arranged in such a way that it is fixed in the longitudinal direction with respect to the respective guide rail (6), while the panel (4) is arranged in such a way that it can be moved in the longitudinal direction with respect to the shielding device (9).

2. Sunroof according to Claim 1, **characterized**
**in that** a left-hand and a right-hand raising lever (5) are connected to the panel (4), whose respective front section is mounted such that it can be displaced in the longitudinal direction on the left-hand and right-hand guide rail (6), respectively, the drive device (8) is provided in order to raise or lower the two raising levers (5) and to displace them forwards or rearwards with respect to the two guide rails (6), the shielding device (9) containing a shield (28) which can be pulled apart in the vertical direction and, in its lower section, is fixed to each guide rail (6), so that it cannot be moved in the longitudinal direction, and
**in that** a stretching device (29) is provided, which brings an upper section of the shield (28) into contact with the panel (4) in such a way that the said shield can be moved in the longitudinal direction with respect to the panel (4), the stretching device (29) bringing the upper section of the shield (28) into contact with the panel (4) even when the panel (4) is in its raised position.

3. Sunroof according to Claim 1 or 2, **characterized in that** the shield (28) is formed in the manner of a bellows.

4. Sunroof according to one of Claims 1 to 3, **characterized in that** the shielding device (9) contains a spring element (30) for pressing a rear upper section of the shield (28) against the panel (4).

5. Sunroof according to one of Claims 1 to 4, **characterized**
**in that** the shielding device (9) contains an engagement element (31) which is arranged on the rear upper section of the shield (28), and in that the panel (4) is provided with a slotted guide (32), which is in engagement with the engagement element (31) and urges the engagement element (31) downwards as the panel (4) is moved back.

6. Sunroof according to Claims 1 to 5, **characterized**
**in that** the shielding device (9) contains an engagement element (31) which is arranged on the rear upper section of the shield (28), and in that the panel (4) is provided with a slotted guide (32), which is in engagement with the engagement element (31) in such a way that the engagement element (31) is raised when the panel (4) is raised, and that the engagement element (31) is lowered when the panel (4) is moved forwards.

7. Sunroof according to one of Claims 1 to 6, **characterized**
**in that** a sunshield (11) is provided in order to open or close an internal opening (10), which is formed under the opening (3) in the solid roof (2), a front section of the sunshield (11) being mounted on the guide rails (6) such that it can be moved in the longitudinal direction and having an engagement projection (33), and in that a front lower section of the shield (28) is mounted on the guide rail (6) such that it can be pivoted about a transverse axis, and
**in that** the shield (28) has an engagement slot (34) on its underside, with which the engagement projection (33) is in engagement, so that it can be moved in the longitudinal direction.

8. Sunroof according to one of Claims 1 to 7, **characterized**
**in that** a holding part (35) is arranged underneath the panel (4) at a point which corresponds approximately to a rear section of the panel (4) in its completely closed position, and
**in that** a rear shield (37) containing at least one ventilating opening (36) is fitted at its lower end to the holding part (35),
an upper end of the rear shield (37) being arranged in the vicinity of the panel (4), so that it can be moved relative to the latter.

9. Sunroof according to Claim 8, **characterized**
**in that** the rear shield (37) is formed integrally with the two lateral shields (28), which are arranged on the right and left of the shield (37).

10. Sunroof according to one of Claims 1 to 9, **characterized**
**in that** a lower section (52) of the shield (50) is fixed to the solid roof (2),
**in that** an upper section (51) of the shield (50), which is mounted such that it can be displaced on the panel (4), is held at its front end (55) in a mounting device (56) which is fixed to the roof and which permits a vertical compensating movement of the front end (55) of the upper section (51) of the shield (50).

11. Sunroof according to Claim 10, **characterized**
**in that** a holding part (60, 61) of the upper section (51) of the shield (50) is held in a holder (59) of the mounting device (56).

12. Sunroof according to Claim 11, **characterized**
**in that** the two front ends (55 and 58) of the lower section (52) of the shield (50) and, respectively, of the upper section (51) of the shield (50) are connected to each other via an elastic element (57).

13. Sunroof for a vehicle, containing:
a panel (4) for opening or closing an opening (3) formed in a solid roof (2),
a left-hand and a right-hand guide rail (6) for mounting the panel (4),
a drive device (8) for raising or lowering the panel (4) and displacing it forwards and rearwards, and
a respective shield, which can be pulled apart vertically and covers the drive device (8) from the inside as the panel (4) is raised,
**characterized**
**in that** the shield (71) is subdivided into an upper section (72, 74) and a lower section (73, 75), which are connected to each other and can be displaced with respect to each other in the longitudinal direction, and
**in that** the upper section (72) of the shield (71) is fixed to the panel (4), and the lower section (73) is fixed to the solid roof (2, 6).

14. Sunroof according to one of Claims 1 to 13, **characterized**
**in that** the drive device (8) moves the panel (4) in such a way that it can be raised from its completely closed position and displaced rearwards in its raised position.

15. Sunroof according to one of Claims 1 to 14, **characterized**
**in that** the drive device (8) moves the panel (4) in such a way that it can be raised from its completely closed position and lowered again and can be moved rearwards in its lowered position.

## Revendications

1. Toit ouvrant pare-soleil d'un véhicule comprenant :
un couvercle (4) pour libérer ou pour obturer une ouverture (3) formée dans un toit fixe (2),
un rail de guidage gauche et un rail de guidage droit (6) qui servent à recevoir le couvercle (4),
un dispositif d'entraînement (8) pour assurer la projection vers l'extérieur ou l'abaissement ainsi que le déplacement vers l'avant et vers l'arrière du couvercle (4) et
un dispositif respectif d'occultation (9) qui peut être étiré dans le sens vertical et qui recouvre le dispositif d'entraînement (8) par l'intérieur lorsque le couvercle (4) est relevé,
**caractérisé en ce que** le dispositif d'occultation (9) est placé de telle façon qu'il soit immobilisé dans le sens longitudinal par rapport au rail de guidage respectif (6) alors que le couvercle (4) est placé de telle façon qu'il soit déplaçable dans le sens longitudinal par rapport au dispositif d'occultation (9).

2. Toit ouvrant pare-soleil selon la revendication 1, **caractérisé** err ce qu'un levier de projection gauche et un levier de projection droit (5), dont la section avant respective est logée de manière déplaçable dans le sens longitudinal respectivement sur le rail de guidage gauche et sur le rail de guidage droit (6), sont reliés avec le couvercle (4), en ce que le dispositif d'entraînement (8) est prévu pour relever ou pour abaisser et pour déplacer vers l'avant ou vers l'arrière des deux leviers de projection (5) par rapport aux deux rails de guidage (6), le dispositif d'occultation (9) comprenant un écran d'occultation (28) qui peut être étiré dans le sens vertical et qui est fixé à sa section inférieure à chaque rail de guidage (6), de sorte qu'il ne soit pas déplaçable dans le sens longitudinal, et en ce qu'il est prévu un dispositif enfichable (29) qui met une section supérieure de l'écran d'occultation (28) de telle façon en contact avec le couvercle (4) qu'il soit déplaçable dans le sens longitudinal par rapport au couvercle (4), le dispositif enfichable (29) mettant la section supérieure de l'écran d'occultation (28) en contact avec le couvercle (4), et ceci même si le couvercle (4) se trouve dans sa position relevée.

3. Toit ouvrant pare-soleil selon la revendication 1 ou 2, **caractérisé en ce que** l'écran d'occultation (28) est configuré à la manière d'un soufflet.

4. Toit ouvrant pare-soleil selon l'une quelconque des revendications 1 à 3, **caractérisé en ce que** le dispositif d'occultation (9) comprend un élément de ressort (30) servant à pousser une section supérieure arrière de l'écran d'occultation (28) contre le couvercle (4).

5. Toit ouvrant pare-soleil selon l'une quelconque des revendications 1 à 4, **caractérisé en ce que** le dispositif d'occultation (9) comprend un élément de mise en contact (31) qui est disposé à la section supérieure arrière de l'écran d'occultation (28) et **en ce que** le couvercle (4) est muni d'un guide à coulisse (32) qui est en prise avec l'élément de mise en contact (31) et qui pousse l'élément de mise en contact (31) vers le bas lorsque le couvercle (4) est déplacé en arrière.

6. Toit ouvrant pare-soleil selon l'une quelconque des revendications 1 à 5, **caractérisé en ce que** le dispositif d'occultation (9) comprend un élément de mise en contact (31) qui est disposé à la section supérieure arrière de l'écran d'occultation (28) et **en ce que** le couvercle (4) est muni d'un guide à coulisse (32) qui est de telle façon en prise avec l'élément de mise en contact (31) que cet élément de mise en contact (31) soit soulevé lorsque le couvercle (4) est relevé et qu'il soit abaissé lorsque le couvercle (4) est déplacé vers l'avant.

7. Toit ouvrant pare-soleil selon l'une quelconque des revendications 1 à 6, **caractérisé en ce qu'**il est prévu un écran de protection solaire (11) pour libérer ou pour occulter une ouverture intérieure (10) qui est formée au-dessous de l'ouverture (3) pratiquée dans le toit fixe (2), une section avant de l'écran de protection solaire (11) étant logée de manière déplaçable dans le sens longitudinal sur les rails de guidage (6) et comprenant une avancée de mise en contact (33), **en ce que** l'écran d'occultation (28) est logé à une section inférieure avant sur le rail de guidage (6), de sorte qu'il puisse être pivoté autour d'un axe transversal et **en ce que** l'écran d'occultation (28) comprend à son côté inférieur une fente de mise en contact (34) avec laquelle est en prise l'avancée de mise en contact (33), de sorte qu'elle soit déplaçable dans le sens longitudinal.

8. Toit ouvrant pare-soleil selon l'une quelconque des revendications 1 à 7, **caractérisé en ce qu'**une pièce de maintien (35) est disposée au-dessous du couvercle (4) à un endroit qui correspond à peu près à une section arrière du couvercle (4) lorsqu'il se trouve dans sa position entièrement fermée et **en ce qu'**un écran d'occultation arrière (37) comprenant au moins une ouverture d'aération (36) est disposé à son extrémité inférieure sur la pièce de maintien (35), une extrémité supérieure de l'écran d'occultation arrière (37) étant disposée à proximité du couvercle (4), de sorte qu'il est déplaçable par rapport celui-ci.

9. Toit ouvrant pare-soleil selon la revendication 8, **caractérisé en ce que** l'écran d'occultation arrière (37) est formé de manière intégrale avec les deux écrans d'occultation latéraux (28) qui sont disposés à droite et à gauche de l'écran d'occultation (37).

10. Toit ouvrant pare-soleil selon l'une quelconque des revendications 1 à 9, **caractérisé en ce qu'**une section inférieure (52) de l'écran d'occultation (50) est fixée sur le toit fixe (2) et **en ce qu'**une section supérieure (51) de l'écran d'occultation (50), laquelle est logée de manière déplaçable sur le couvercle (4), est maintenue à son extrémité avant (55) dans un dispositif de logement (56) solidaire du toit qui permet à l'extrémité avant (55) de la section supérieure (51) de l'écran d'occultation (50) d'effectuer un mouvement vertical de compensation.

11. Toit ouvrant pare-soleil selon la revendication 10, **caractérisé en ce qu'**une pièce de maintien (60, 61) de la section supérieure (51) de l'écran d'occultation (50) est maintenue dans un réceptacle (59) du dispositif de logement (56).

12. Toit ouvrant pare-soleil selon la revendication 11, **caractérisé en ce que** les deux extrémités avant (55 et 58)respectivement de la section inférieure (52) de l'écran d'occultation (50) et de la section supérieure (51) de l'écran d'occultation (50) sont reliées entre elles au moyen d'un élément souple (57).

13. Toit ouvrant pare-soleil d'un véhicule comprenant :
un couvercle (4) pour libérer ou pour obturer une ouverture (3) formée dans un toit fixe (2),
un rail de guidage gauche et rail de guidage droit (6) qui servent à recevoir le couvercle (4),
un dispositif d'entraînement (8) pour assurer la projection vers l'extérieur ou l'abaissement ainsi que le déplacement vers l'avant et vers l'arrière du couvercle (4) et
un dispositif respectif d'occultation (9) qui peut être étiré dans le sens vertical et qui recouvre le dispositif d'entraînement (8) par l'intérieur lorsque le couvercle (4) est relevé,
**caractérisé en ce que** l'écran d'occultation (71) est subdivisé en une section supérieure (72, 74) et en une section inférieure (73, 75) qui sont reliées entre elles et qui peuvent être déplacées l'une par rapport à l'autre dans la direction longitudinale et **en ce que** la section supérieure (72) de l'écran d'occultation (71) est fixée sur le couvercle (4) et la section inférieure (73) est fixée sur le toit fixe (2, 6).

14. Toit ouvrant pare-soleil selon l'une quelconque des revendications 1 à 13, **caractérisé en ce que** le dispositif d'entraînement (8) déplace le couvercle (4) de telle façon qu'il soit relevé à partir de sa position entièrement fermée et qu'il soit déplacé vers l'arrière dans sa position relevée.

15. Toit ouvrant pare-soleil selon l'une quelconque des revendications 1 à 14, **caractérisé en ce que** le dispositif d'entraînement (8) déplace le couvercle (4) de telle façon qu'il puisse, à partir de sa position entièrement fermée, être relevé et à nouveau abaissée et qu'il puisse être déplacé vers l'arrière dans sa position abaissée.
